# EUROPEAN PATENT SPECIFICATION

(11) **EP 2 692 810 B1**
(45) Date of publication and mention of the grant of the patent: **18.11.2015**
(21) Application number: 12763311.3
(22) Date of filing: 23.03.2012
(51) Int. Cl.: C09J 133/02, B27D 1/04, B27N 3/00, C09J 11/06, C09J 105/00, C09J 135/00

(54) **BONDING COMPOSITION AND BOARD**
BINDUNGSZUSAMMENSETZUNG UND PAPPE
COMPOSITION LIANTE ET PANNEAU

(30) Priority: 31.03.2011 JP 2011080271; 19.12.2011 JP 2011276986
(43) Date of publication of application: 05.02.2014
(73) Proprietor: Panasonic Corporation, Osaka 571-8501 (JP)
(72) Inventor: SUGAWARA, Ryo, Osaka 540-6207 (JP); UMEMURA, Kenji, Osaka 540-6207 (JP)
(74) Representative: Müller-Boré & Partner Patentanwälte PartG mbB
(86) International application number: PCT/JP2012/057579
(87) International publication number: WO 2012/133219

(56) References cited:
- EP-A1- 2 223 940
- WO-A1-2010/001988
- CA-A1- 2 726 842
- JP-A- 63 102 905
- JP-A- H10 504 504
- JP-A- 2003 055 637
- US-A- 5 440 027

## Description

### Technical Field

The present invention relates to a bonding composition that can be used as a material for an adhesive and a board containing the bonding composition.

### Background Art

In recent years, as interest in environmental issues such as global warming increases, resins, which is obtained by polymerizing decomposed products derived from plants and has properties of low emission and carbon-neutral, have attracted attention as an alternative of materials derived from petroleum in the field of plastics. In particular, polylactic acid obtained by polymerizing lactic acid that is a kind of decomposed product derived from plants is a crystallizabile resin that has higher physical properties than other resins derived from plants, and that can be mass-produced at a relatively low production cost. However, polylactic acid has not become widespread because it is a thermoplastic resin with lower thermal resistance and mechanical characteristics than general-purpose thermoplastic resins (such as PE, PP, and ABS) derived from petroleum. Furthermore, polylactic acid has insufficient physical properties to be used as an alternative to petroleum thermosetting resin adhesives.

Originally, wood adhesives mainly derived from biomass, as well as those derived from casein, soybean glue, glue, and the like were used, but their physical properties are poor, and therefore they have been replaced by petroleum thermosetting resin adhesives such as urea, melamine or phenol. Element pieces such as fibers, fragments and single plates derived from woody or herbaceous plants are bonded with these adhesives, so that woody boards such as plywood boards, particle boards, fiberboards, and the like are manufactured. Furthermore, element pieces such as inorganic fibers and fragments are bonded, so that inorganic boards are manufactured.

General wood adhesives (urea, melamine, phenol) are derived from petroleum, and formaldehyde is used as a curing agent. The adhesive is required to be aqueous. Since release of formaldehyde from these adhesives becomes an issue, measures to reduce it have been taken, but the release of formaldehyde cannot be completely suppressed. Although a petroleum isocyanate-based adhesive that does not release formaldehyde has been developed, it does not become widespread because its reaction with water, coupling to metal, or the like causes problems.

On the other hand, since tannin and lignin which are polyphenols contained in wood and bark are waste products of sawing or pulp use, attempts to use them effectively have been made since long ago. For example, since the chemical structure of tannin or lignin is similar to that of a phenolic resin, consideration has been given to the fact that tannin or lignin is reacted with formaldehyde and condensed in the same manner as a phenolic resin, and used as an adhesive (see Patent Literature 1). Furthermore, consideration has been given to the fact that tannin or lignin is added to a phenolic resin in expectation of reaction of tannin or lignin with methylol groups in a phenolic resin, so that tannin or lignin is brought into the polymer skeleton of the phenolic resin (see Non-Patent Literature 1 and 2).

As another attempt to use tannin or lignin effectively, consideration has been given to the fact that phenolic hydroxyl groups of tannin or lignin are reacted with polyisocyanate to make an urethane resin (see Non-Patent Literature 2).

However, if tannin or lignin is reacted using formaldehyde, there has been an issue in that residual formaldehyde or formaldehyde generated by hydrolysis is released. Furthermore, since reactivity of tannin or lignin is lower than that of a conventional phenolic resin, the physical properties and productivity are poor, and the technology described above is not widely brought into practical use.

Meanwhile, consideration has been given to the fact that a composition including a powdered or fragmented material derived from plants and a polyvalent carboxylic acid as essential components, or a composition including a powdered or fragmented material derived from plants, a polyvalent carboxylic acid and a saccharide as essential components is used as a molding composition or a wood bonding composition (see Patent Literature 2). However, a powdered or fragmented material derived from plants is included as an essential component in order to provide a molding composition with shape retention. Since it is assumed that plant fragments are bonded as an adhesive, a powdered or fragmented material derived from plants is included as an essential component. However, it is not a suitable constitution for bonding plant boards that are not fragments or inorganic materials.

Furthermore, consideration is given to the preparation of an adhesive including materials obtained by a Maillard reaction between an amine such as an ammonium salt of a polyvalent carboxylic acid and a carbohydrate such as a saccharide (see Patent Literature 3). Since this is obtained by a Maillard reaction between an amine and a saccharide, a low-cost polyvalent carboxylic acid cannot be used without being treated. Additionally, a composition designed to delay cement curing is described in Patent Literature 4, and a composition obtained mainly by a reaction of polyol or epoxy is described in Patent Literature 5, but neither are caused by a reaction between a polyvalent carboxylic acid and a saccharide.

### Citation List

### Patent Literature

Patent Literature 1: Japanese Patent No. 3796604
Patent Literature 2: WO2010/001988 A
Patent Literature 3: JP 2009-503193A
Patent Literature 4: JP 10-45992A
Patent Literature 5: JP 2006-28528A

### Non-Patent Literature

Non-Patent Literature 1: "New Woody Material Handbook" Gihodo Shuppan Co., Ltd., p. 361
Non-Patent Literature 2: "Advanced Technologies for Chemicals from Wood Resources" CMC Publishing Co., Ltd., p. 225 (2007)

CA 2 726 842 A1 discloses a composition cured by applying heat/pressure thereto, comprising a polyvalent carboxylic acid and a saccharide. EP 2 223 940 A1 discloses a thermosetting composition comprising dextrose and citric acid. US 5,440,027 discloses the preparation of fatty acid polyester compriosing the reaction of an acid, a saccharide in the presence of p-toluenesulfonic acid as a catalyst.

### Summary of Invention

### Technical Problem

The present invention was made in view of these circumstances, and an object thereof is to provide a bonding composition having high adhesion, from which formaldehyde is not likely to be released.

It is also an object of the present invention to provide a board from which formaldehyde is not likely to be released.

### Solution to Problem

A bonding composition according to the present invention is cured through heating and pressing, comprising a polyvalent carboxylic acid having a plurality of carboxyl groups in a molecule; a saccharide; and *p*-toluenesulfonic acid.

It is preferable that the bonding composition is at least in form of an aqueous solution where the polyvalent carboxylic acid is dissolved in water or an aqueous dispersion where the polyvalent carboxylic acid is dispersed in water.

It is preferable that the bonding composition further contains a thickening agent.

It is preferable that the bonding composition further contains a phosphate.

It is preferable that the bonding composition further contains at least one selected from an organic titanium compound and an organic tin compound.

It is preferable that the bonding composition further contains *p*-toluenesulfonic acid.

It is preferable that, in the bonding composition, a boiling point of the polyvalent carboxylic acid is not more than 150°C.

It is preferable that, in the bonding composition, the polyvalent carboxylic acid is at least one selected from maleic acid anhydride and oxalic acid.

It is preferable that, in the bonding composition, a molecular weight of the polyvalent carboxylic acid is 300 or more.

It is preferable that, in the bonding composition, the polyvalent carboxylic acid is at least one selected from polymaleic acid and polyacrylic acid.

It is preferable, that in the bonding composition, the thickening agent is at least one selected from a group consisting of carboxymethyl cellulose, polyvinyl alcohol, inorganic powder, and plant powder.

It is preferable that, in the bonding composition, the phosphate is at least one selected from a hydrogen phosphate and a dihydrogen phosphate.

A board according to the present invention is obtained through heating and pressing element pieces such as fibers, fragments and single plates derived from woody or herbaceous plants, which the bonding composition is applied to or sprayed on, to cure the bonding composition.

A board according to the present invention is obtained through heating and pressing element pieces such as inorganic fibers and fragments, which the bonding composition is applied to or sprayed on, to cure the bonding composition.

### Advantageous Effects of Invention

A bonding composition in accordance with the present invention has high adhesion and is not likely to release formaldehyde therefrom.

A board in accordance with the present invention is not likely to release formaldehyde therefrom.

### Description of Embodiments

Hereinafter, embodiments for implementing the present invention will be described.

A bonding composition in accordance with the present invention contains a polyvalent carboxylic acid as an essential component and contains a saccharide as other component. Furthermore, the bonding composition of the present invention may contain a furan compound, and may further contain another component as needed, excluding a powdered or fragmented material derived from plants. Note that the above-described material derived from plants refers to a material derived from xylem, bark, seeds, leaves of plants, and examples thereof include commercially available plant powders (e.g., bark powder) and chips obtained by pulverizing recyclable materials.

There is no particular limitation on the polyvalent carboxylic acid that is an essential component as long as it is a compound having a plurality of carboxyl groups. In some literatures, it is described as a polycarboxylic acid.

Examples of the polyvalent carboxylic acids include citric acid, tartaric acid, malic acid, succinic acid, oxalic acid, adipic acid, malonic acid, phthalic acid, sebacic acid, maleic acid, fumaric acid, itaconic acid, glutaric acid (pentanedioic acid), gluconic acid, glutaconic acid, pentenedioic acid. A polyvalent carboxylic acid anhydride can also be used. Of these, citric acid, tartaric acid, malic acid, gluconic acid, sebacic acid, itaconic acid are made from plants, and many of the other polyvalent carboxylic acids can also be made from plants. If plants are used as raw materials, the bonding composition can be obtained with no burden on the environment because the use of fossil resources can be suppressed. As a polyvalent carboxylic acid, the above-described compounds can be used alone or in a combination of two or more.

It is preferable that the boiling point of the polyvalent carboxylic acid is not more than 150°C. Since a modification and an esterification reaction of the polyvalent carboxylic acid and the saccharide or the furan compound (the embodiment with a furan compound alone is not in accordance with the present invention) are promoted at a temperature near the boiling point of the polyvalent carboxylic acid, the bonding composition containing the polyvalent carboxylic acid having boiling point of not more than 150°C is used to provide high adhesion through heating even at a relatively low temperature. In this case, at least one selected from maleic acid anhydride and oxalic acid can be used as a polyvalent carboxylic acid. The boiling points of maleic acid anhydride and oxalic acid measured by TG-DTA are 130°C and 140°C, respectively, and the bonding compositions containing these compounds provide high adhesion even through heating at a relatively low temperature.

It is preferable that the molecular weight of the polyvalent carboxylic acid is 300 or more. Many of the polyvalent carboxylic acids described above have a molecular weight of less than 300, and a low viscosity when they are dissolved in water or melt. Herein, even if an adherend is an element piece such as a fiber, a fragment and a single plate derived from woody or herbaceous plants, it is believed to be possible to make adhesion less likely to lower by making the bonding composition less likely to penetrate the inside of the adherend to make the bonding composition remaining on the surface of the adherend less likely to decrease. Furthermore, even if the bonding composition does not penetrate the adherend, it is believed to be possible to make adhesion less likely to lower due to the viscosity of the bonding composition lowering, thus making an amount of runoff of the bonding composition from the surface of the adherend less likely to increase. In other words, if a molecular weight of the polyvalent carboxylic acid is 300 or more, it is possible to make the viscosity of the bonding composition high, to suppress penetration of the adherend as well as runoff from the surface of the adherend, and to provide high adhesion through heating and pressing.

In this case, at least one selected from polymaleic acid and polyacrylic acid can be used as a polyvalent carboxylic acid. The polymaleic acid having a molecular weight of about 500 to several tens of thousands, and the polyacrylic acid having a number-average molecular weight of about 5,000 to 500,000 are commercially available. With the bonding compositions containing these polyvalent carboxylic acids, penetrations in the adherend or runoff from the surface of the adherend are suppressed and high adhesion is provided through heating and pressing.

The furan compound is a compound that is often contained in substances generated through heating a saccharide or a wood-base material, and has a furan ring. Examples of the furan compounds include furfural, hydroxymethylfurfural, furfuryl alcohol. As a furan compound, the above-described compounds can be used alone or in a combination of two or more. As described above, if at least one selected from the group consisting of furfural, hydroxymethylfurfural and furfuryl alcohol is used, high adhesion of the bonding composition is provided through heating and pressing. Since a large amount of furfural, hydroxymethylfurfural and furfuryl alcohol is contained in substances generated through heating a saccharide or a wood-base material, modified products of the bonding composition can be esterified with them to facilitate forming cured polymers, and superior adhesion is provided.

Saccharides refer to monosaccharides, oligosaccharides, or polysaccharides. Examples of the monosaccharides include fructose, ribose, arabinose, rhamnose, xylulose, deoxyribose. Examples of oligosaccharides include disaccharides such as maltose, trehalose and turanose, fructooligosaccharide, galactooligosaccharide, mannanoligosaccharide, stachyose. Examples of polysaccharides include starch, agarose, alginic acid, glucomannan, inulin, chitin, chitosan, hyaluronic acid, glycogen, cellulose. As a saccharide, the above-described compounds can be used alone or in a combination of two or more.

It is believed that the bonding composition containing the polyvalent carboxylic acid and at least one of the furan compound and the saccharide is esterified to form polymers after modified thorough heating. Accordingly, superior adhesion is provided and cured products can be obtained.

It is preferable that the bonding composition as described above is in form of an aqueous solution where the polyvalent carboxylic acid and at least one selected from the furan compound and the saccharide (the embodiment with a furan compound alone is not in accordance with the present invention) are dissolved in water or an aqueous dispersion where the polyvalent carboxylic acid and at least one selected from the furan compound and the saccharide are dispersed in water. The polyvalent carboxylic acid, the furan compound, and the saccharide have high solubility in water, and an aqueous dispersion is defined as a solution containing them over their saturation concentration in water. If the bonding composition described above is in form of an aqueous solution or an aqueous dispersion, it is easily applied to or sprayed on an adherend, and it is highly safe to the human body because no organic solvent is used. Furthermore, if the polyvalent carboxylic acid and the furan compound or the saccharide are compatible, a modification and an esterification reaction of the polyvalent carboxylic acid and the furan compound or the saccharide are promoted to form cured polymers and to provide excellent adhesion.

It is preferable that the bonding composition described above further contains a thickening agent other than the above-described components. There are cases where the viscosity decreases in the process where the bonding composition containing the polyvalent carboxylic acid and the furan compound or the saccharide (the embodiment with a furan compound alone is not in accordance with the present invention) as essential components is heated, modified, and reacted to form cured polymers. Herein, even if an adherend is an element piece such as a fiber, a fragment or a single plate derived from woody or herbaceous plants, it is believed to be possible to make adhesion less likely to lower by making the bonding composition less likely to penetrate the inside of the adherend, thus making the bonding composition remaining on the surface of the adherend less likely to decrease. Furthermore, even if the bonding composition does not penetrate the adherend, it is believed to be possible to make adhesion less likely to weaken by lowering the viscosity of the bonding composition, thus making an amount of runoff of the bonding composition from the surface of the adherend less likely to increase. Accordingly, if the bonding composition contains the thickening agent, it is possible to suppress the penetration of the adherend as well as the runoff from the surface of the adherend, and to provide high adhesion through heating and pressing.

The thickening agents can be broadly classified into, for example, inorganic and organic thickening agents. Examples of the inorganic thickening agents include clay, talc, silica (amorphous silicon dioxide powder). Examples of the organic thickening agents include carboxymethyl cellulose, polyvinyl alcohol, and vegetable powders such as wheat flour, cornstarch, rice flour, walnut powder, palm powder. As a thickening agent, the above-described compounds can be used alone or in a combination of two or more. If at least one selected from the group consisting of carboxymethyl cellulose, polyvinyl alcohol, inorganic powders and vegetable powders is used as a thickening agent in this manner, runoff from the adherend and penetration in the adherend are easily suppressed because these thickening agents retain a thickening effect even if it is subjected to heating, and high adhesion is provided through heating and pressing.

Furthermore, it is preferable that the bonding composition described above contains an additive having a reaction-promoting effect such as a phosphate, an organic titanium compound, an organic tin compound, and other than the above-described components. The above-described esterification reaction is promoted by addition of a phosphate, and high adhesion is provided through heating and pressing. Examples of the phosphates include, for example, ammonium phosphate, sodium phosphate, potassium phosphate, calcium phosphate and a phosphate, a hydrogen salt, a dihydrogen salt thereof. As a phosphate, the above-described compounds can be used alone or in a combination of two or more. If a phosphate is at least one selected from a hydrogen phosphate and a dihydrogen phosphate, a hydrogen phosphate or a dihydrogen phosphate is highly safe because it is also used as a food additive, and has a high reaction-promoting effect. Accordingly, safety of the bonding composition is improved, and high adhesion is provided through heating and pressing.

Other than the above-described components, it is preferable that the bonding composition described above further contains at least one selected from an organic titanium compound and an organic tin compound. The above-described esterification reaction is promoted by addition of at least one selected from the organic titanium compound and the organic tin compound, and high adhesion is provided through heating and pressing. Examples of the organic titanium compounds include tetramethyl titanate, tetraethyl titanate, tetrapropyl titanate, tetrabutoxy titanate. Examples of the organic tin compounds include dibutyltin dicarboxylate, dibutyltin diacetate, dibutyltin dilaurate, dibutyltin diisooctanoate, dibutyltin maleate, dialkyltin dicarboxylate, such as mixed dibutyltin dicarboxylate; dioctyltin dicarboxylate, dialkyltin dicarboxylate having a long chain fatty acid ester such as dioctyltin dilaurate; trialkyltin alkoxide such as tributyltin oxide; monoalkyltin compounds such as monobutyltin dihydroxy chloride and monobutyltin dioxide; tin salts such as tin acetate and tin oxalate.

Other than the above-described components, the bonding composition described above further contains *p*-toluenesulfonic acid. The above-described esterification reaction is promoted by an acid catalytic effect owing to the addition of *p*-toluenesulfonic acid, and high adhesion is provided through heating and pressing.

In the bonding composition described above, it is preferable that a composition ratio (a content ratio) in parts by mass of the polyvalent carboxylic acid to the total of the polyvalent carboxylic acid, the furan compound and the saccharide is 10 to 100 : 100, a composition ratio in parts by mass of the furan compound to the total of the polyvalent carboxylic acid, the furan compound and the saccharide is 0 to 90 : 100, and a composition ratio in parts by mass of the saccharide to the total of the polyvalent carboxylic acid, the furan compound and the saccharide is 0 to 90 : 100. More specifically, if the bonding composition includes two components, namely the polyvalent carboxylic acid and the furan compound, it is preferable that a composition ratio in parts by mass of the polyvalent carboxylic acid to the total of the polyvalent carboxylic acid and the furan compound is 10 or more and less than 100 : 100 and a composition ratio in parts by mass of the furan compound to the total of the polyvalent carboxylic acid and the furan compound is more than 0 and not more than 90 : 100, and it is more preferable that a composition ratio in parts by mass of the polyvalent carboxylic acid to the total of the polyvalent carboxylic acid and the furan compound is 20 or more and not more than 80 : 100 and a composition ratio in parts by mass of the furan compound to the total of the polyvalent carboxylic acid and the furan compound is 20 or more and not more than 80 : 100. If the bonding composition includes two components, namely the polyvalent carboxylic acid and the saccharide, it is preferable that a composition ratio in parts by mass of the polyvalent carboxylic acid to the total of the polyvalent carboxylic acid and the saccharide is 10 or more and less than 100 : 100 and a composition ratio in parts by mass of the saccharide to the total of the polyvalent carboxylic acid and the saccharide is more than 0 and not more than 90 : 100, and it is more preferable that a composition ratio in parts by mass of the polyvalent carboxylic acid to the total of the polyvalent carboxylic acid and the saccharide is 20 or more and not more than 80 : 100 and a composition ratio in parts by mass of the saccharide to the total of the polyvalent carboxylic acid and the saccharide is 20 or more and not more than 80 : 100. If the bonding composition includes three components, namely the polyvalent carboxylic acid, the furan compound and the saccharide, it is preferable that a composition ratio in parts by mass of the polyvalent carboxylic acid to the total of the polyvalent carboxylic acid, the furan compound and the saccharide is 10 or more and less than 100 : 100, a composition ratio in parts by mass of the furan compound to the total of the polyvalent carboxylic acid, the furan compound and the saccharide is more than 0 and not more than 80 : 100, and a composition ratio in parts by mass of the saccharide to the total of the polyvalent carboxylic acid, the furan compound and the saccharide is more than 0 and not more than 90 : 100, and it is more preferable that a composition ratio in parts by mass of the polyvalent carboxylic acid to the total of the polyvalent carboxylic acid, the furan compound and the saccharide is 20 or more and not more than 80 : 100, a composition ratio in parts by mass of the furan compound to the total of the polyvalent carboxylic acid, the furan compound and the saccharide is 20 or more and not more than 80 : 100, and a composition ratio in parts by mass of the saccharide to the total of the polyvalent carboxylic acid, the furan compound and the saccharide is 20 or more and not more than 80 : 100. The embodiment with a furan compound alone is not in accordance with the present invention.

It is advantageous that a composition ratio in parts by mass of the polyvalent carboxylic acid to the total of the polyvalent carboxylic acid, the furan compound and the saccharide is 10 or more : 100 in that the carboxyl groups contributing to the reaction with the furan compounds and the saccharides do not decrease excessively, the bonding composition is easily cured, and high adhesion can be obtained.

Furthermore, it is more preferable that a composition ratio in parts by mass of the polyvalent carboxylic acid to the total of the polyvalent carboxylic acid, the furan compound and the saccharide is 20 or more : 100 in that water resistance after molding is improved since the carboxyl groups react with the saccharides in the woody element pieces, so that the amount of the hydroxyl groups in the woody element pieces decreases even if the carboxyl groups that do not contribute to the reaction between the furan compounds and the saccharides exist. It is more preferable that the composition ratio in parts by mass of the polyvalent carboxylic acid to the total of the polyvalent carboxylic acid, the furan compound and the saccharide is not more than 80 :100 in that adhesion is improved because the reaction of the polyvalent carboxylic acid with the furan compound and the saccharide relatively increases more than reaction of the polyvalent carboxylic acid with the saccharide in the woody element pieces, so that the cured polymers that are formed increase.

It is advantageous that the furan compound is used in that superior adhesion can be obtained because it is believed that the furan compound forms polymers by esterification with the polyvalent carboxylic acid, and by condensation of the furan compounds catalyzed by the polyvalent carboxylic acid. It is more preferable that the composition ratio in parts by mass of the furan compound to the total of the polyvalent carboxylic acid, the furan compound, and the saccharide is 20 or more : 100 in that high adhesion can be obtained because the amount of the cured products increases.

Furthermore, it is advantageous that a composition ratio in parts by mass of the furan compound to the total of the polyvalent carboxylic acid, the furan compound, and the saccharide is not more than 90 : 100, in that high adhesion can be obtained. It is more preferable that a composition ratio in parts by mass of the furan compound to the total of the polyvalent carboxylic acid, the furan compound and the saccharide is not more than 80 : 100 in that water resistance after molding is improved because the composition ratio of the polyvalent carboxyl acid relatively increases, and the carboxyl groups react with the saccharides in the woody element pieces, so that the amount of the hydroxyl groups in the woody element pieces decrease even if the carboxyl groups that do not contribute to the reaction with the furan compounds exist.

It is advantageous that the saccharide is used, in that high adhesion can be obtained because the saccharide forms polymers by esterification after being modified by the polyvalent carboxylic acid. It is more preferable that the composition ratio in parts by mass of the saccharide to the total of the polyvalent carboxylic acid, the furan compound, and the saccharide is 20 or more : 100 in that the saccharide is a relatively inexpensive material.

Furthermore, it is advantageous that the composition ratio in parts by mass of the saccharide to the total of the polyvalent carboxylic acid, the furan compound, and the saccharide is not more than 90 : 100, in that high adhesion can be obtained. It is more preferable that the composition ratio in parts by mass of the saccharide to the total of the polyvalent carboxylic acid, the furan compound and the saccharide is not more than 80 : 100, in that water resistance after molding is improved because the composition ratio of the polyvalent carboxyl acid relatively increases, and the carboxyl groups react with the saccharides in the woody element pieces, so that an amount of the hydroxyl groups in the woody element pieces decrease even if the carboxyl groups contributing to no reaction with the saccharides exist.

Furthermore, if the bonding composition is in form of an aqueous solution or an aqueous dispersion as described above, a compounding amount of water is set as appropriate in accordance with a shape or surface properties of the adherend, and is not limited. The bonding composition in form of an aqueous solution or an aqueous dispersion preferably contains 15 or more and not more than 500 parts by mass of the water with respect to 100 parts by mass of the total of the polyvalent carboxylic acid, the furan compound, and the saccharide. If a compounding amount of the water is 15 or more parts by mass, the amount of the water is not too small, so that the uniform bonding composition can be easily obtained. Furthermore, it is more preferable that a compounding amount of the water is 25 or more parts by mass in that the more uniform bonding composition can be easily obtained.

On the other hand, if the compounding amount of the water is not more than 500 parts by mass, the amount of the water is not too large, and thus excessive penetration of the bonding composition is not likely to occur, and sufficient curing of the bonding composition is easily performed because the rise in temperature is unlikely to slow due to evaporation when the bonding composition is cured through heating. Furthermore, it is more preferable that a compounding amount of the water is not more than 400 parts by mass, in that excessive penetration of the bonding composition is less likely to occur, and sufficient curing of the bonding composition is easily performed.

Furthermore, in the bonding composition described above, the compounding amount of the thickening agent is set as appropriate in accordance with the shape and surface properties of the adherend, and is not limited. A compounding amount of the thickening agent is preferably more than 0 and not more than 50 parts by mass with respect to 100 parts by mass of the total of the polyvalent carboxylic acid, the furan compound, and the saccharide. If the compounding amount of the thickening agent is more than 0 parts by mass, the bonding composition can be thickened, and thus excessive penetration of the bonding composition is unlikely to occur. Furthermore, it is more preferable that the compounding amount of the thickening agent is 10 or more parts by mass in that excessive penetration of the bonding composition is less likely to occur. On the other hand, if a compounding amount of the thickening agent is not more than 50 parts by mass, the compounding rate of the other components is not lowered, and thus the adhesion of the bonding composition is unlikely to lower. It is more preferable that the compounding amount of the thickening agent is not more than 30 parts by mass in that the compounding rate of the other components is not lowered, and thus the adhesion of the bonding composition is less likely to lower.

Furthermore, in the bonding composition described above, the compounding amount of the phosphate is set as appropriate in accordance with a shape or surface properties of the adherend, and is not limited. The compounding amount of the phosphate is preferably more than 0 and not more than 10 parts by mass with respect to 100 parts by mass of the total of the polyvalent carboxylic acid, the furan compound, and the saccharide. If the compounding amount of the phosphate is more than 0 parts by mass, it is possible to promote a reaction of the bonding composition, and thus quick curing of the bonding composition is more easily performed. On the other hand, if the compounding amount of the phosphate is not more than 10 parts by mass, the bonding composition is rarely cured excessively fast, and thus has excellent handleability.

Furthermore, in the bonding composition described above, the compounding amount of the organic titanium compound or the organic tin compound is set as appropriate in accordance with the shape or surface properties of the adherend, and is not limited. The compounding amount of the organic titanium compound or the organic tin compound is preferably more than 0 and not more than 1 part by mass with respect to 100 parts by mass of the total of the polyvalent carboxylic acid, the furan compound, and the saccharide. If the compounding amount of the organic titanium compound or the organic tin compound is more than 0 parts by mass, it is possible to promote a reaction of the bonding composition, and thus quick curing of the bonding composition is more easily performed. On the other hand, if the compounding amount of the organic titanium compound or the organic tin compound is not more than 1 part by mass, the bonding composition is rarely cured excessively fast, and thus the useful bonding composition can be obtained upon handling. Herein, the compounds described above can be used alone or in a combination of two or more.

Furthermore, in the bonding composition described above, the compounding amount of the *p*-toluenesulfonic acid is set as appropriate in accordance with the shape or surface properties of the adherend, and is not limited. The compounding amount of the *p*-toluenesulfonic acid is preferably more than 0 and less than 10 parts by mass with respect to 100 parts by mass of the total of the polyvalent carboxylic acid, the furan compound, and the saccharide. If the compounding amount of the *p*-toluenesulfonic acid is more than 0 parts by mass, it is possible to promote a reaction of the bonding composition, and thus quick curing of the bonding composition is more easily performed. On the other hand, if a compounding amount of the *p*-toluenesulfonic acid is less than 10 parts by mass, the bonding composition is rarely cured excessively fast, and thus a bonding composition that can be easily handled can be obtained. If the compounding amount of the *p*-toluenesulfonic acid is 10 or more parts by mass, not only is the pot life shortened and the handling of the bonding composition made difficult, but the physical properties thereof are also not improved because the bonding composition is cured excessively fast. Herein, the compounds described above can be used alone or in a combination of two or more.

A board in accordance with the present invention is a woody board obtained through heating and pressing element pieces such as fibers, fragments and single plates derived from woody or herbaceous plants, onto which the bonding composition is applied or sprayed, and when the bonding composition is cured, the element pieces are bonded with the cured bonding composition. For example, element pieces including a sawn board, a single plate, woody strands, woody chips, woody fibers; which are obtained by cutting from wood, and which are element pieces of wood, and vegetable fibers, are referred to as a woody element piece, and a woody board such as a laminated wood, a plywood board, a particle board, a fiberboard, MDF is obtained by bonding the woody element pieces with an adhesive. If the bonding composition described above is used as this adhesive, the bonding composition forms cured polymers, and superior adhesion is provided.

The woody element piece has a large number of hydroxyl groups, and it has high hydrophilicity and a high affinity for this bonding composition. Furthermore, adhesion is improved by an esterification reaction between the hydroxyl groups in the woody element piece and the polyvalent carboxylic acid, and water resistance after molding is improved because the amount of the hydroxyl groups in the woody element decreases. Moreover, since the reaction system does not include an organic solvent or formaldehyde, nor does it include a tertiary amine from which the formaldehyde is released after decomposing, the release of the organic solvent or the formaldehyde derived from the adhesive is easily suppressed.

Furthermore, a board in accordance with the present invention is an inorganic board obtained through heating and pressing element pieces such as inorganic fibers and fragments, onto which the bonding composition is applied or sprayed, and when the bonding composition is cured, the element pieces are bonded with the cured bonding composition. For example, the inorganic board, exemplified by a rock wool board or a glass wool board, is obtained by bonding the inorganic element pieces such as rock wool and glass wool with an adhesive. If the bonding composition described above is used as this adhesive, the bonding composition forms cured polymers, and superior adhesion is provided.

In the molding of the woody board or the inorganic board described above, the amount of the bonding composition applied, the application method, the molding pressure, the molding temperature and the molding time are set as appropriate in accordance with the type, shape, and surface properties of the element piece that is the adherend, and with the thickness of the board, and is not limited. As is the case with existing adhesives, adhesion is lowered if the application amount is too small, and if the application amount is too large, interfacial adhesion is lowered due to the adhesive layer being too thick. Accordingly, it is preferable that 5 or more and not more than 30 parts by mass of the bonding composition is mixed with respect to 100 parts by mass of the dry element piece. Thereby, adhesion is unlikely to lower, and interfacial adhesion is also unlikely to lower. A more preferable lower limit of the compounding amount of the bonding composition is 8 or more parts by mass with respect to 100 parts by mass of the element pieces. Thereby, adhesion is less likely to lower. Furthermore, a more preferable upper limit of the compounding amount of the bonding composition is not more than 25 parts by mass with respect to 100 parts by mass of the element piece. Thereby, interface adhesion is less likely to lower.

Furthermore, if the adherend is a face material, examples of the application methods include an application with a roll or a brush, a spraying of an aqueous solution with a spray, a spraying of powder. Furthermore, if the adherend is a fiber or a fragment, examples of the application methods include impregnation with an aqueous solution, as well as spraying an aqueous solution with a spray or the like and spraying powder.

Furthermore, the molding pressure, the molding temperature, the molding time are also set as appropriate in accordance with the type, shape and surface properties of an element piece, and with the thickness of the board, but it is preferable that the molding temperature is in a range of 140°C to 220°C. If the molding temperature is not more than 220°C, physical properties as a board is hardly lowered because the polyvalent carboxylic acid is not likely to volatilize rapidly and the adherend is not likely to deteriorate. Furthermore, if the molding temperature is 140°C or more, a reaction rate hardly decreases, so that the bonding composition is sufficiently cured easily. A more preferable upper limit of the molding temperature is 200°C or less. Therefore, the polyvalent carboxylic acid is less likely to volatilize rapidly, and the adherend is also less likely to deteriorate. A more preferable lower limit of the molding temperature is 160°C or more. Therefore, the reaction rate is less likely to decrease, and thus sufficient curing of the bonding composition is easily performed.

It is preferable that the molding pressure is in a range of 0.5 MPa to 4 MPa. If the molding pressure is 0.5 MPa or more, the bonding composition and the adherend are crimped sufficiently, and thus the strength of the board is easily improved. If the molding pressure is not more than 4 MPa, the molding pressure is not too high, and thus the board is less prone to rupture. A more preferable upper limit of the molding pressure is not more than 3 MPa. Thereby, the bonding composition and the adherend are crimped sufficiently, and the strength of the board is more easily improved. A more preferable lower limit of the molding pressure is 0.7 MPa or more. Thereby, the board is much less prone to rupture.

### Examples

Hereinafter, the present invention will be described more specifically by way of examples, but the present invention is not limited to these examples. Examples 1-23 and 25-37 are reference examples only, being not within the scope of the invention. Examples 24 and 38-42 are in accordance with the invention.
Note that the term "parts" used in this chapter refers to parts by mass.

### Examples 1-18, Comparative Examples 1-3 (bonding stainless steel blocks)

### Example 1

A powdery bonding composition was prepared by mixing 25 parts malic acid (product name: Malic Acid, available from Wako Pure Chemical Industries, Ltd.) as a polyvalent carboxylic acid and 75 parts sucrose (product name: Sucrose, available from Wako Pure Chemical Industries, Ltd.) as a saccharide. This bonding composition was sprayed on a 50 mm x 50 mm plane surface of one steel (stainless steel) block used for a peel strength test according to JIS A 5905 at 132 g/m², a counterpart steel (stainless steel) block was stacked on the sprayed surface, and the blocks were heated at 200°C for 60 minutes in a dryer. The pressure on the adhesive surface was 0.0013 MPa. Peel strength of the two steel (stainless steel) blocks bonded by this treatment was measured according to a method of JIS A 5905. Furthermore, after the two blocks were immersed in water at 25°C for 24 hours, or after the two blocks were immersed in boiling water for 4 hours, it was evaluated whether the adhesion state was maintained, and a residual weight rate was measured after the immersed sample was dried at 105°C for 4 hours. Moreover, the amount of formaldehyde released was measured according to a JIS A 5905 method. If the amount of formaldehyde measured was at a detection limit or below, the example was evaluated as "absent", and if formaldehyde was detected, the example was evaluated as "present". The formulation of the bonding composition, the adhesion state, and the results are shown in Table 1.

### Example 2

A powder obtained by mixing 50 parts citric acid (product name: Citric Acid, available from Wako Pure Chemical Industries, Ltd.) as a polyvalent carboxylic acid and 50 parts sucrose (product name: Sucrose, available from Wako Pure Chemical Industries, Ltd.) as a saccharide was dissolved in 61 parts of water to be an aqueous solution. This aqueous solution was applied as a bonding composition to a 50 mm x 50 mm plane surface of one steel (stainless steel) block used for a peel strength test according to JIS A 5905 at 132 g/m². Note that this amount of the application is the mass of the non-volatile matter (solid content) in the solution. Subsequently, two steel (stainless steel) blocks were bonded as in Example 1, and the same measurements as those described above were performed. The formulation of the bonding composition, the adhesion state, and the results are shown in Table 1.

### Example 3

A powder obtained by mixing 25 parts malic acid (product name: Malic Acid, available from Wako Pure Chemical Industries, Ltd.) as a polyvalent carboxylic acid and 75 parts sucrose (product name: Sucrose, available from Wako Pure Chemical Industries, Ltd.) as a saccharide was dissolved in 30 parts water to be an aqueous solution, and then 26 parts wheat flour (product name: Red Ball, available from Nisshin Flour Milling Inc.) were mixed into the solution as a thickening agent to be an aqueous dispersion. The two steel (stainless steel) blocks were bonded in the same manner as in Example 2, except that this aqueous dispersion was used as a bonding composition, and the same measurements as those described above were performed. The formulation of the bonding composition, the adhesion state, and the results are shown in Table 1.

### Example 4

A powder obtained by mixing 75 parts malic acid (product name: Malic Acid, available from Wako Pure Chemical Industries, Ltd.) as a polyvalent carboxylic acid and 25 parts sucrose (product name: Sucrose, available from Wako Pure Chemical Industries, Ltd.) as a saccharide was dissolved in 30 parts water to be an aqueous solution, and then 26 parts wheat flour (product name: Red Ball, available from Nisshin Flour Milling Inc.) were mixed into the solution as a thickening agent to be an aqueous dispersion. The two steel (stainless steel) blocks were bonded in the same manner as in Example 2, except that this aqueous dispersion was used as a bonding composition, and the same measurements as those described above were performed. The formulation of the bonding composition, the adhesion state, and the results are shown in Table 1.

### Example 5

The preparation was performed in the same manner as in Example 3, except that 75 parts furfuryl alcohol (product name: Furfuryl Alcohol, available from Wako Pure Chemical Industries, Ltd.) were mixed into the solution as a furan compound instead of a saccharide, and the same measurements as those described above were performed. The formulation of the bonding composition, the adhesion state, and the results are shown in Table 1.

### Example 6

A powder obtained by mixing 25 parts malic acid (product name: Malic Acid, available from Wako Pure Chemical Industries, Ltd.) as a polyvalent carboxylic acid, 50 parts sucrose (product name: Sucrose, available from Wako Pure Chemical Industries, Ltd.) as a saccharide and 25 parts furfuryl alcohol (product name: Furfuryl Alcohol, available from Wako Pure Chemical Industries, Ltd.) as a furan compound was dissolved in 30 parts of water to be an aqueous solution, and then 26 parts wheat flour (product name: Red Ball, available from Nisshin Flour Milling Inc.) were mixed into the solution as a thickening agent to be an aqueous dispersion. The preparation was performed in the same manner as in Example 2, except that this aqueous dispersion was used as a bonding composition, and the same measurements as those described above were performed. The formulation of the bonding composition, the adhesion state, and the results are shown in Table 1.

### Example 7

A powder obtained by mixing 50 parts citric acid (product name: Citric Acid, available from Wako Pure Chemical Industries, Ltd.) as a polyvalent carboxylic acid and 50 parts sucrose (product name: Sucrose, available from Wako Pure Chemical Industries, Ltd.) as a saccharide was dissolved in 30 parts water to be an aqueous solution, and then 26 parts wheat flour (product name: Red Ball, available from Nisshin Flour Milling Inc.) as a thickening agent and 10 parts disodium hydrogenphosphate were added to the solution to be an aqueous dispersion. The preparation was performed in the same manner as in Example 2, except that this aqueous dispersion was used as a bonding composition, and the same measurements as those described above were performed. The formulation of the bonding composition, the adhesion state, and the results are shown in Table 1.

### Comparative Example 1

The two steel (stainless steel) blocks were bonded in the same manner as in Example 1, except that a powder containing 100 parts sucrose (product name: Sucrose, available from Wako Pure Chemical Industries, Ltd.) of a saccharide was used as the bonding composition without a polyvalent carboxylic acid being mixed in, and the same measurements as those described above were performed. The formulation of the bonding composition, the adhesion state, and the results are shown in Table 1.

### Comparative Example 2

The two steel (stainless steel) blocks were bonded in the same manner as in Example 2, except that an aqueous dispersion prepared by diluting polylactic acid emulsion (product number: PL-1000, available from Miyoshi Oil & Fat Co., Ltd) such that the mass ratio of non-volatile matter of polylactic acid to water was 100 : 100 was used as the bonding composition, and the same measurements as those described above were performed. The formulation of the bonding composition, the adhesion state, and the results are shown in Table 1.

### Comparative Example 3

The two steel (stainless steel) blocks were bonded in the same manner as in Example 2, except that an aqueous dispersion prepared by diluting a phenolic resin adhesive (product number: PL3725, available from: Gun Ei Chemical Industry Co., Ltd.) such that the mass ratio of non-volatile matter of the phenolic resin to water was 100 : 100 was used as the bonding composition, and the same measurements as those described above were performed. The formulation of the bonding composition, the adhesion state, and the results are shown in Table 1.

**Table 1**

| | | Ex. 1 | Ex. 2 | Ex. 3 | Ex.4 | Ex. 5 | Ex. 6 | Ex. 7 | Com. Ex. 1 | Com. Ex. 2 | Com. Ex. 3 |
|---|---|---|---|---|---|---|---|---|---|---|---|
| Polyvalent carboxylic acid | Type | Malic acid | Citric acid | Malic acid | Malic acid | Malic acid | Malic acid | Citric acid | - | Polylactic acid emulsion adhesive | Phenolic resin adhesive |
| | Boiling Point | 185°C | 180°C | 185°C | 185°C | 185°C | 185°C | 180°C | - | - | - |
| | Parts | 25 | 50 | 25 | 75 | 25 | 25 | 50 | - | 100 | 100 |
| Saccharide | Type | Sucrose | Sucrose | Sucrose | Sucrose | - | Sucrose | Sucrose | Sucrose | - | - |
| | Parts | 75 | 50 | 75 | 25 | - | 50 | 50 | 100 | - | - |
| Furan compound | Type | - | - | - | - | Furfuryl alcohol | Furfuryl alcohol | - | - | - | - |
| | Parts | - | - | - | - | 75 | 25 | - | - | - | - |
| Thickening agent | Type | - | - | Wheat flour | Wheat flour | Wheat flour | Wheat flour | Wheat flour | - | - | - |
| | Parts | - | - | 26 | 26 | 26 | 26 | 26 | - | - | - |
| Phosphate | Type | - | - | - | - | - | - | Disodium hydrogen-phosphate | - | - | - |
| | Parts | - | - | - | - | - | - | 10 | - | - | - |
| Water | Parts | - | 61 | 30 | 30 | 30 | 30 | 30 | - | 100 | 100 |
| Form of bonding composition | | Powder | Liquid | Liquid | Liquid | Liquid | Liquid | Liquid | Powder | Liquid | Liquid |
| Adherend | Type | Stainless steel block | | | | | | | | | |
| | Form | Plane surface | | | | | | | | | |
| Adhesion state | Application amount solid content (g/m²) | 132 | | | | | | | | | |
| | Temperature (°C) | 200 | | | | | | | | | |
| | Time (min) | 60 | | | | | | | | | |
| | Pressure (MPa) | 0.0013 | | | | | | | | | |
| Normal condition | Peel strength (N/mm²) | 2.65 | 3.32 | 3.29 | 1.60 | 2.43 | 2.64 | 1.94 | 0.14 | 2.34 | 2.61 |
| After immersion in water at 20°C for 24 h | Adhesion state to adherend | ○ | ○ | ○ | ○ | ○ | ○ | ○ | x | x | ○ |
| | Residual weight rate of dry adhesion component | 50% | 96% | 98% | 87% | 97% | 97% | 97% | 0% | 32% | 98% |
| After immersion in boiling water for 4 h | Adhesion state to adherend | x | ○ | ○ | ○ | ○ | ○ | ○ | x | x | ○ |
| | Residual weight rate of dry adhesion component | 15% | 33% | 55% | 48% | 77% | 73% | 51% | 0% | 0% | 50% |
| Normal condition | Formaldehyde released | A | A | A | A | A | A | A | A | A | P |

| | | | | | | | | | | | |
|---|---|---|---|---|---|---|---|---|---|---|---|
| A: absent, P: present | | | | | | | | | | | |

As described above, Examples 1-3 are able to bond the metal blocks and have a higher adhesive strength than that of the Comparative Examples.

Comparative Example 1 has low adhesive strength and low water resistance. This is probably because Comparative Example 1 contains no polyvalent carboxylic acid, and the modification for a bonding component is not carried out. Example 1 shows improved adhesive strength because it contains the polyvalent carboxylic acid. Furthermore, the reaction is probably promoted because the bonding composition was in form of a solution in Example 2 and therefore the promoted reaction results in improving adhesion, water resistance, and hot water resistance. Furthermore, in Example 3 and Example 4, runoff from the adhesive surface is probably suppressed owing to the addition of a thickening agent and therefore adhesion, water resistance, and hot water resistance are further improved. Furthermore, in each of Examples 1 to 4, the bonding composition is capable of providing adhesion in a wide range of composition ratios of the polyvalent carboxylic acid. By using a furan compound instead of a saccharide in Example 5, using a saccharide and a furan compound together in Example 6 and compounding a thickening agent and a phosphate in Example 7, the reaction is promoted, and therefore, adhesion, water resistance, and hot water resistance are further improved. Comparative Example 2, which is an adhesive product and is derived from plant materials, has relatively high adhesive strength in normal condition, but has low water resistance and low hot water resistance. Comparative Example 3, which is an adhesive product, has high adhesion, high water resistance and high hot water resistance, but is different from Examples in that it is not derived from plant materials and in that formaldehyde released therefrom is detected.

Examples 8-19, Comparative Examples 4-6 (comparison using a kenaf fiberboard obtained by bonding kenaf fibers)

### Example 8

A powder obtained by mixing 50 parts of citric acid (product name: Citric Acid, available from Wako Pure Chemical Industries, Ltd.) as a polyvalent carboxylic acid and 50 parts of maltose (product name: Maltose, available from Wako Pure Chemical Industries, Ltd.) as a saccharide was dissolved in 400 parts of water to be an aqueous solution. This aqueous solution was used as a bonding composition. Furthermore, a fiber mat (650 g/m² of mass per unit area) made of a kenaf fiber bundle (40 mm of an average length and 82 µm of an average diameter) obtained from bast, which is an outer cover of a stem of a kenaf, was impregnated with the bonding composition described above, and was adjusted by squeezing so that the dry weight ratio of the plant fiber mat to non-volatile matter (solid content) of the bonding composition was 750 : 250. Hereafter, the fiber mat impregnated with the bonding composition was dried at 100°C for 10 minutes in a dryer, and then two mats were piled up and were subjected to press molding at a heating platen temperature of 200°C and at a pressure of 2 MPa for 10 minutes to produce a fiberboard. After immersing the board of the present example in water, peel strength and swelling in thickness were measured according to JIS A 5905. The formulation of the bonding composition, the adhesion state, the board molding condition, and the results are shown in Table 2.

### Example 9

A powder obtained by mixing 50 parts malic acid (product name: Malic Acid, available from Wako Pure Chemical Industries, Ltd.) as a polyvalent carboxylic acid and 50 parts sucrose (product name: Sucrose, available from Wako Pure Chemical Industries, Ltd.) as a saccharide was dissolved in 400 parts water to be an aqueous solution. A fiberboard was produced in the same manner as in Example 8, except that this solution was used as a bonding composition, and the same measurements as those described above were performed. The formulation of the bonding composition, the adhesion state, the board molding condition, and the results are shown in Table 2.

### Example 10

A powder obtained by mixing 50 parts oxalic acid (Wako Pure Chemical Industries, Ltd.) as a polyvalent carboxylic acid and 50 parts sucrose (product name: Sucrose, available from Wako Pure Chemical Industries, Ltd.) as a saccharide was dissolved in 400 parts water to be an aqueous solution. A fiberboard was produced in the same manner as in Example 8, except that this solution was used as a bonding composition and the molding temperature was 180°C, and the same measurements as those described above were performed. The formulation of the bonding composition, the adhesion state, the board molding condition, and the results are shown in Table 2.

### Example 11

A powder obtained by mixing 50 parts maleic acid anhydride (product name: Maleic anhydride, available from Wako Pure Chemical Industries, Ltd.) as a polyvalent carboxylic acid and 50 parts sucrose (product name: Sucrose, available from Wako Pure Chemical Industries, Ltd.) as a saccharide was dissolved in 400 parts water to be an aqueous solution. A fiberboard was produced in the same manner as in Example 8, except that this solution was used as a bonding composition and the molding temperature was 180°C, and the same measurements as those described above were performed. The formulation of the bonding composition, the adhesion state, the board molding condition, and the results are shown in Table 2.

### Example 12

Twenty-five parts malic acid (product name: Malic Acid, available from Wako Pure Chemical Industries, Ltd.) as a polyvalent carboxylic acid and 75 parts furfuryl alcohol (product name: Furfuryl Alcohol, available from Wako Pure Chemical Industries, Ltd.) as a furan compound were dissolved in 400 parts water to be an aqueous solution. A fiberboard was produced in the same manner as in Example 8, except that this solution was used as a bonding composition and the molding temperature was 180°C, and the same measurements as those described above were performed. The formulation of the bonding composition, the adhesion state, the board molding condition, and the results are shown in Table 2.

### Example 13

Twenty five parts malic acid (product name: Malic Acid, available from Wako Pure Chemical Industries, Ltd.) as a polyvalent carboxylic acid, 50 parts sucrose (product name: Sucrose, available from Wako Pure Chemical Industries, Ltd.) as a saccharide and 25 parts furfuryl alcohol (product name: Furfuryl Alcohol, available from Wako Pure Chemical Industries, Ltd.) as a furan compound were dissolved in 400 parts water to be an aqueous solution. A fiberboard was produced in the same manner as in Example 8, except that this solution was used as a bonding composition and the molding temperature was 160°C, and the same measurements as those described above were performed. The formulation of the bonding composition, the adhesion state, the board molding condition, and the results are shown in Table 2.

### Example 14

A powder of 100 parts malic acid (product name: Malic Acid, available from Wako Pure Chemical Industries, Ltd.) as a polyvalent carboxylic acid was dissolved in 400 parts water to be an aqueous solution. A fiberboard was produced in the same manner as in Example 8, except that this dispersion was used as a bonding composition, and the same measurements as those described above were performed. The formulation of the bonding composition, the adhesion state, the board molding condition, and the results are shown in Table 2.

### Example 15

A powder of 100 parts malic acid (product name: Malic Acid, available from Wako Pure Chemical Industries, Ltd.) as a polyvalent carboxylic acid was dissolved in 400 parts water to be an aqueous solution. Eight parts disodium hydrogenphosphate were mixed into this solution as a phosphate to be an aqueous dispersion. A fiberboard was produced in the same manner as in Example 8, except that this solution was used as a bonding composition, and the same measurements as those described above were performed. The formulation of the bonding composition, the adhesion state, the board molding condition, and the results are shown in Table 2.

### Example 16

Powder of 100 parts maleic acid anhydride (product name: Maleic anhydride, available from Wako Pure Chemical Industries, Ltd.) as a polyvalent carboxylic acid was dissolved in 400 parts water to be an aqueous solution. A fiberboard was produced in the same manner as in Example 8, except that this solution was used as a bonding composition, and the same measurements as those described above were performed. The formulation of the bonding composition, the adhesion state, the board molding condition, and the results are shown in Table 3.

### Example 17

Ten parts disodium hydrogenphosphate were mixed into the solution as a phosphate to be an aqueous dispersion in Example 16. The preparation was performed in the same manner as in Example 16, except that this aqueous dispersion was used as a bonding composition, and the same measurements as those described above were performed. The formulation of the bonding composition, the adhesion state, and the results are shown in Table 3.

### Example 18

A fiberboard was produced in the same manner as in Example 8, except that the molding temperature was 160°C in Example 17, and the same measurements as those described above were performed. The formulation of the bonding composition, the adhesion state, the board molding condition, and the results are shown in Table 3.

### Example 19

A powder obtained by mixing 75 parts maleic acid anhydride (product name: Maleic anhydride, available from Wako Pure Chemical Industries, Ltd.) as a polyvalent carboxylic acid and 25 parts sucrose (product name: Sucrose, available from Wako Pure Chemical Industries, Ltd.) as a saccharide was dissolved in 400 parts water to be an aqueous solution. Ten parts disodium hydrogenphosphate were mixed into this solution as a phosphate to be an aqueous dispersion. A fiberboard was produced in the same manner as in Example 8, except that this aqueous dispersion was used as a bonding composition and the molding temperature was 180°C, and the same measurements as those described above were performed. The formulation of the bonding composition, the adhesion state, the board molding condition, and the results are shown in Table 3.

### Example 20

A fiberboard was produced in the same manner as in Example 11, except that polymaleic acid (product name: NONPOL, available from NOF Corporation) whose molecular weight was 2,000 was used as a polyvalent carboxylic acid in Example 11, and the same measurements as those described above were performed. The formulation of the bonding composition, the adhesion state, the board molding condition, and the results are shown in Table 4.

### Example 21

A fiberboard was produced in the same manner as in Example 11, except that polyacrylic acid (product name: Aron, available from Toagosei Co., Ltd.) whose molecular weight was 500,000 was used as a polyvalent carboxylic acid in Example 11, and the same measurements as those described above were performed. The formulation of the bonding composition, the adhesion state, the board molding condition, and the results are shown in Table 4.

### Example 22

In Example 9, 0.3 part tetrakis(2-ethylhexyloxy) titanium (product number: TOT, available from Nippon Soda Co., Ltd.) were mixed into the solution as an organic titanium compound to be an aqueous dispersion. The preparation was performed in the same manner as in Example 9, except that this aqueous dispersion was used as a bonding composition, and the same measurements as those described above were performed. The formulation of the bonding composition, the adhesion state, and the results are shown in Table 4.

### Example 23

In Example 16, 0.9 part di-n-octyltin oxide (product number: Doto, available from Hokko Chemical Industry Co., Ltd.) were mixed into the solution as an organic tin compound to be an aqueous dispersion. The preparation was performed in the same manner as in Example 15, except that this aqueous dispersion was used as a bonding composition, and the same measurements as those described above were performed. The formulation of the bonding composition, the adhesion state, and the results are shown in Table 4.

### Example 24

In Example 13, 0.9 part *p*-toluenesulfonic acid (product name: *p*-Toluenesulfonic Acid, available from Wako Pure Chemical Industries, Ltd.) were mixed into the solution to be an aqueous dispersion. The preparation was performed in the same manner as in Example 13, except that this aqueous dispersion was used as a bonding composition, and the same measurements as those described above were performed. The formulation of the bonding composition, the adhesion state, and the results are shown in Table 4.

### Comparative Example 4

A powder of 100 parts sucrose (product name: Sucrose, available from Wako Pure Chemical Industries, Ltd.) as a saccharide was dissolved in 400 parts water to be an aqueous solution. A fiberboard was produced in the same manner as in Example 8, except that this solution was used as a bonding composition, and the same measurements as those described above were performed. The formulation of the bonding composition, the adhesion state, the board molding condition, and the results are shown in Table 3.

### Comparative Example 5

An aqueous dispersion was prepared by diluting polylactic acid emulsion (product number: PL-1000, available from Miyoshi Oil & Fat Co., Ltd) such that the mass ratio of non-volatile matter of polylactic acid to water was 100 : 400. A fiberboard was produced in the same manner as in Example 8, except that this solution was used as a bonding composition, and the same measurements as those described above were performed. The formulation of the bonding composition, the adhesion state, the board molding condition, and the results are shown in Table 3.

### Comparative Example 6

An aqueous dispersion was prepared by diluting an aqueous acrylic resin adhesive (product number: 940L, available from BASF) such that the mass ratio of non-volatile matter of an aqueous acrylic resin adhesive to water was 100 : 400. A fiberboard was produced as in Example 8, except that this solution was used as a bonding composition, and the same measurements as those described above were performed. The formulation of the bonding composition, the adhesion state, the board molding condition, and the results are shown in Table 3.

**Table2**

| | | Ex. 8 | Ex. 9 | Ex.10 | Ex. 11 | Ex. 12 | Ex. 13 | Ex. 14 | Ex. 15 |
|---|---|---|---|---|---|---|---|---|---|
| Polyvalent carboxylic aad | Type | Citric acid | Malic acid | Oxalic acid | Maleic acid anhydride | Malic acid | Malic acid | Malic acid | Malic acid |
| | Boiling Point | 180°C | 185°C | 140°C | 130°C | 185°C | 185°C | 185°C | 185°C |
| | Parts | 50 | 50 | 50 | 50 | 25 | 25 | 100 | 100 |
| Saccharide | Type | Maltose | Sucrose | Sucrose | Sucrose | - | Sucrose | - | - |
| | Parts | 50 | 50 | 50 | 50 | - | 50 | - | - |
| Furan compound | Type | - | - | - | - | Furfuryl alcohol | Furfuryl alcohol | - | - |
| | Parts | - | - | - | - | 75 | 25 | - | - |
| Thickening agent | Type | - | - | - | - | - | - | - | - |
| | Parts | - | - | - | - | - | - | - | - |
| Phosphate | Type | - | - | - | - | - | - | - | Disodium hydrogen-phosphate |
| | Parts | - | - | - | - | - | - | - | 8 |
| Water | Parts | 400 | 400 | 400 | 400 | 400 | 400 | 400 | 400 |
| Form of bonding composition | | Liquid | Liquid | Liquid | Liquid | Liquid | Liquid | Liquid | Liquid |
| Adherend | Type | Kenaf fiber | Kenaf fiber | Kenaf fiber | Kenaf fiber | Kenaf fiber | Kenaf fiber | Kenaf fiber | Kenaf fiber |
| | Form | Fiber | Fiber | Fiber | Fiber | Fiber | Fiber | Fiber | Fiber |
| Adhesion state | Resin ratio | 25% | 25% | 25% | 25% | 25% | 25% | 25% | 25% |
| | Temperature (°C) | 200 | 200 | 180 | 180 | 180 | 160 | 200 | 180 |
| | Time (min) | 10 | 10 | 10 | 10 | 10 | 10 | 10 | 10 |
| | Pressure (MPa) | 2.0 | 2.0 | 2.0 | 2.0 | 2.0 | 2.0 | 2.0 | 2.0 |
| Normal condition | Peel strength (N/mm²) | 0.5 | 0.7 | 0.4 | 0.4 | 0.4 | 0.5 | 0.4 | 0.4 |
| After immersion in water at 20°C for 24 h | Swelling in thickness after immersion in water | 20% | 15% | 5% | 14% | 13% | 12% | 5% | 14% |
| Normal condition | Formaldehyde released | A | A | A | A | A | A | A | A |

| | | | | | | | | | |
|---|---|---|---|---|---|---|---|---|---|
| A: absent | | | | | | | | | |

**Table 3**

| | | Ex. 16 | Ex. 17 | Ex. 18 | Ex.19 | Com. Ex. 4 | Com. Ex. 5 | Com. Ex. 6 |
|---|---|---|---|---|---|---|---|---|
| Polyvalent carboxylic acid | Type | Maleic acid anhydride | Maleic acid anhydride | Maleic acid anhydride | Maleic acid anhydride | - | Polylactic acid emulsion adhesive | Aqueous acrylic resin adhesive |
| | Boiling Point | 130°C | 130°C | 130°C | 130°C | - | - | - |
| | Parts | 100 | 100 | 100 | 75 | - | 100 | 100 |
| Saccharide | Type | - | - | - | Sucrose | Sucrose | - | - |
| | Parts | - | - | - | 25 | 100 | - | - |
| Furan compound | Type | - | - | - | - | - | - | - |
| | Parts | - | - | - | - | - | - | - |
| Thickening agent | Type | - | - | - | - | - | - | - |
| | Parts | - | - | - | - | - | - | - |
| Phosphate | Type | - | Disodium hydrogen-phosphate | Disodium hydrogen-Phosphate | Disodium hydrogen-phosphate | - | - | - |
| | Parts | - | 10 | 10 | 10 | - | - | - |
| Water | Parts | 400 | 400 | 400 | 400 | 400 | 400 | 400 |
| Form of bonding composition | | Liquid | Liquid | Liquid | Liquid | Liquid | Liquid | Liquid |
| Adherend | Type | Kenaf fiber | Kenaf fiber | Kenaf fiber | Kenaf fiber | Kenaf fiber | Kenaf fiber | Kenaf fiber |
| | Form | Fiber | Fiber | Fiber | Fiber | Fiber | Fiber | Fiber |
| Adhesion state | Resin ratio | 25% | 25% | 25% | 25% | 25% | 25% | 25% |
| | Temperature (°C) | 180 | 180 | 160 | 180 | 200 | 200 | 200 |
| | Time (min) | 10 | 10 | 10 | 10 | 10 | 10 | 10 |
| | Pressure (MPa) | 2.0 | 2.0 | 2.0 | 2.0 | 2.0 | 2.0 | 2.0 |
| Normal condition | Peel strength (N/mm²) | 0.3 | 0.7 | 0.9 | 0.6 | 0.1 | 0.3 | 0.4 |
| After immersion in water at 20°C for 24 h | Swelling in thickness after immersion in water | 11% | 12% | 11% | 12% | 102% | 42% | 17% |
| Normal condition | Formaldehyde released | A | A | A | A | A | A | A |

| | | | | | | | | |
|---|---|---|---|---|---|---|---|---|
| A: absent | | | | | | | | |

As described above, Examples 8-19 are able to bond fibers to each other, thereby enabling production of a fiberboard. Comparative Example 4 has low adhesive strength and low water resistance. This is probably because Comparative Example 4 contains no polyvalent carboxylic acid, and the modification for a bonding component is not implemented. Examples 8 and 9 contain a saccharide and a polyvalent carboxylic acid, thereby improving adhesive strength. Since oxalic acid and maleic acid anhydride are used as a polyvalent carboxylic acid in each of Examples 10 and 11, the bonding composition is capable of providing adhesion even at a lower temperature than in Examples 8 and 9. A furan compound is used instead of a saccharide in Example 12, and a saccharide and a furan compound are used together in Example 13. In each case, fibers can be bonded to each other, and therefore it is possible to produce a fiberboard.

Example 14 shows improved water resistance because the formulation is changed so that a larger amount of a polyvalent carboxylic acid is contained. In Example 15, since a phosphate was added, the bonding composition is capable of providing adhesion at a relatively lower temperature. Since maleic acid anhydride is used as a polyvalent carboxylic acid in Example 16, the bonding composition is capable of providing adhesion at a lower temperature than in Example 14. In each of Examples 17 and 18, probably, adhesion is achieved and the reaction is promoted at a relatively lower temperature, and adhesion, water resistance, and hot water resistance are improved because maleic acid anhydride is used as a polyvalent carboxylic acid and a phosphate is added. Since a phosphate is compounded in Example 19, the bonding composition is capable of providing adhesion at a relatively lower temperature.

**Table 4**

| | | Ex. 20 | Ex. 21 | Ex. 22 | Ex. 23 | Ex. 24 |
|---|---|---|---|---|---|---|
| Polyvalent carboxylic acid | Type | Polymaleic acid | Polyacrylic acid | Malic acid | Maleic acid anhydride | Malic acid |
| | Boiling Point | 200°C | 205°C | 185°C | 130°C | 185°C |
| | Parts | 50 | 50 | 50 | 100 | 25 |
| Saccharide | Type | Maltose | Sucrose | Sucrose | - | Sucrose |
| | Parts | 50 | 50 | 50 | - | 50 |
| Furan compound | Type | - | - | - | - | Furfuryl alcohol |
| | Parts | - | - | - | - | 25 |
| Thickening agent | Type | - | - | - | - | - |
| | Parts | - | - | - | - | - |
| Phosphate | Type | - | - | - | - | - |
| | Parts | - | - | - | - | - |
| Organic titanium compound | Type | - | - | TOT | - | - |
| | Parts | - | - | 0.3 | - | - |
| Organic tin compound | Type | - | - | - | Doto | - |
| | Parts | - | - | - | 0.9 | - |
| *p*-bluenesulfonic acid | Type | - | - | - | - | *p*-Tbluenesulfonic acid |
| | Parts | - | - | - | - | 0.9 |
| Water | Parts | 400 | 400 | 400 | 400 | 400 |
| Form of bonding composition | | Liquid | Liquid | Liquid | Liquid | Liquid |
| Adherend | Type | Kenaf fiber | Kenaf fiber | Kenaf fiber | Kenaf fiber | Kenaf fiber |
| | Form | Fiber | Fiber | Fiber | Fiber | Fiber |
| Adhesion state | Resin ratio | 25% | 25% | 25% | 25% | 25% |
| | Temperature (°C) | 180 | 180 | 200 | 180 | 180 |
| | Time (min) | 10 | 10 | 55% | 10 | 10 |
| | Pressure (MPa) | 2.0 | 2.0 | 2.0 | 2.0 | 2.0 |
| Normal condition | Peel strength (N/mm²) | 0.7 | 0.9 | 0.9 | 0.6 | 0.8 |
| After immersion in water at 20°C for 24 h | Swelling in thickness after immersion in water | 16% | 17% | 12% | 9% | 10% |
| Normal condition | Formaldehyde released | A | A | A | A | A |

| | | | | | | |
|---|---|---|---|---|---|---|
| A: absent | | | | | | |

Since polymaleic acid having a molecular weight of 2,000 being used as a polyvalent carboxylic acid in Example 20, Example 20 has peel strength improved over that in Example 11. Furthermore, Example 21 in which polyacrylic acid having a molecular weight of 500,000 is used as a polyvalent carboxylic acid has peel strength improved more than in Example 11. This is probably because penetration of the adherend and runoff from the surface of the adherend are suppressed and high adhesion is provided through heating and pressing.

Example 22 in which an organic titanium compound is added shows adhesion and water resistance which are improved more than in Example 9. Example 23 in which an organic tin compound is added shows adhesion and water resistance which are improved more than in Example 15. Example 24 in which *p*-toluenesulfonic acid is added shows adhesion and water resistance which are improved more than Example 15. The reaction is probably promoted, and adhesion and water resistance are improved in every Examples.

In Comparative Example 5, which is an adhesive product and is derived from plant materials, adhesive strength in normal condition is not high, and water resistance is low. In Comparative Example 6, which is an adhesive product, but is not derived from plant materials, adhesion and water resistance are not so low.

Examples 25-35, Comparative Examples 7-9 (comparison using a plywood board obtained by bonding single plates)

### Example 25

A powder obtained by mixing 75 parts malic acid (product name: Malic Acid, available from Wako Pure Chemical Industries, Ltd.) as a polyvalent carboxylic acid and 25 parts sucrose (product name: Sucrose, available from Wako Pure Chemical Industries, Ltd.) as a saccharide was used as a bonding composition to produce a plywood board. Cedar single plates (water content of 5% by mass) with a thickness of 2.5 mm were used, and the bonding composition was sprayed with 132 g/m² on one side of a cedar single plate. Five cedar single plates on which the bonding composition was sprayed were piled up and were subjected to hot pressing at a temperature of 200°C at a pressure of 0.8 MPa for 10 minutes to produce a plywood board with a thickness of 11.5 mm and a density of 500 kg/m³. A peel strength test and a water absorption test of the plywood board of the present example were performed according to JIS A 5905, and it was evaluated whether there was separation or not, and swelling in thickness was measured. Furthermore, after a sample 50 mm square was immersed in boiling water for 4 hours, it was evaluated whether there was separation or not, and the length of separated portion in a section was measured to determine a percentage of separation with respect to the entire length of the adhesion surface. The formulation of the bonding composition, the adhesion state, the board molding condition, and the results are shown in Table 5.

### Example 26

Thirty parts water were added to a powder obtained by mixing 50 parts citric acid (product name: Citric Acid, available from Wako Pure Chemical Industries, Ltd.) as a polyvalent carboxylic acid and 50 parts sucrose (product name: Sucrose, available from Wako Pure Chemical Industries, Ltd.) as a saccharide to be an aqueous dispersion. A plywood board was produced in the same manner as in Example 20, except that this aqueous dispersion as a bonding composition was applied to one side of a cedar single plate with the application amount of 132 g/m² using a roll, and the same measurements as those described above were performed. Note that this amount of the application is the mass of non-volatile matter (solid content) in the aqueous dispersion. The formulation of the bonding composition, the adhesion state, the board molding condition, and the results are shown in Table 5.

### Example 27

Thirty parts water and 45 parts polyvinyl alcohol as a thickening agent were added to powder obtained by mixing 50 parts citric acid (product name: Citric Acid, available from Wako Pure Chemical Industries, Ltd.) as a polyvalent carboxylic acid and 50 parts sucrose (product name: Sucrose, available from Wako Pure Chemical Industries, Ltd.) as a saccharide to be an aqueous dispersion. A plywood board was produced in the same manner as in Example 20, except that this aqueous dispersion was used as a bonding composition and the molding temperature was 180°C, and the same measurements as those described above were performed. The formulation of the bonding composition, the adhesion state, the board molding condition, and the results are shown in Table 5.

### Example 28

Thirty parts water and 26 parts talc as a thickening agent were added to a powder obtained by mixing 12 parts malic acid (product name: Malic Acid, available from Wako Pure Chemical Industries, Ltd.) as a polyvalent carboxylic acid and 88 parts sucrose (product name: Sucrose, available from Wako Pure Chemical Industries, Ltd.) as a saccharide to be an aqueous dispersion. A plywood board was produced in the same manner as in Example 20, except that this aqueous dispersion was used as a bonding composition, and the same measurements as those described above were performed. The formulation of the bonding composition, the adhesion state, the board molding condition, and the results are shown in Table 5.

### Example 29

Thirty parts water and 26 parts wheat flour (product name: Red Ball, available from Nisshin Flour Milling Inc.) as a thickening agent were added to a powder obtained by mixing 50 parts malic acid (product name: Malic Acid, available from Wako Pure Chemical Industries, Ltd.) as a polyvalent carboxylic acid and 50 parts sucrose (product name: Sucrose, available from Wako Pure Chemical Industries, Ltd.) as a saccharide to be an aqueous dispersion. A plywood board was produced in the same manner as in Example 20, except that this aqueous dispersion was used as a bonding composition, and the same measurements as those described above were performed. The formulation of the bonding composition, the adhesion state, the board molding condition, and the results are shown in Table 5.

### Example 30

Thirty parts water and 26 parts wheat flour (product name: Red Ball, available from Nisshin Flour Milling Inc.) as a thickening agent were added to powder obtained by mixing 25 parts maleic acid anhydride (product name: Maleic anhydride, available from Wako Pure Chemical Industries, Ltd.) as a polyvalent carboxylic acid and 75 parts sucrose (product name: Sucrose, available from Wako Pure Chemical Industries, Ltd.) as a saccharide to be an aqueous dispersion. A plywood board was produced in the same manner as in Example 20, except that this aqueous dispersion was used as a bonding composition, and the same measurements as those described above were performed. The formulation of the bonding composition, the adhesion state, the board molding condition, and the results are shown in Table 4.

### Example 31

A plywood board was produced in the same manner as in Example 20, except that an aqueous dispersion prepared by adding 30 parts water and 26 parts wheat flour (product name: Red Ball, available from Nisshin Flour Milling Inc.) as a thickening agent to a powder obtained by mixing 25 parts maleic acid anhydride (product name: Maleic anhydride, available from Wako Pure Chemical Industries, Ltd.) as a polyvalent carboxylic acid and 75 parts sucrose (product name: Sucrose, available from Wako Pure Chemical Industries, Ltd.) as a saccharide was used as an bonding composition, and the molding temperature was 160°C, and the same measurements as those described above were performed. The formulation of the bonding composition, the adhesion state, the board molding condition, and the results are shown in Table 5.

### Example 32

An bonding composition was prepared by adding 30 parts water, 26 parts wheat flour (product name: Red Ball, available from Nisshin Flour Milling Inc.) as a thickening agent and 8 parts disodium hydrogenphosphate to a powder obtained by mixing 25 parts maleic acid anhydride (product name: Maleic anhydride, available from Wako Pure Chemical Industries, Ltd.) as a polyvalent carboxylic acid and 75 parts sucrose (product name: Sucrose, available from Wako Pure Chemical Industries, Ltd.) as a saccharide. A plywood board was produced in the same manner as in Example 20, except that the bonding composition was used for maple single plates (water content of 5% by mass) with a thickness of 2.5 mm and the molding temperature was 160°C, and the same measurements as those described above were performed. The formulation of the bonding composition, the adhesion state, the board molding condition, and the results are shown in Table 6.

### Example 33

A plywood board was produced in the same manner as in Example 20, except that an aqueous dispersion prepared by adding 30 parts water, 26 parts wheat flour (product name: Red Ball, available from Nisshin Flour Milling Inc.) as a thickening agent and 8 parts disodium hydrogenphosphate as a phosphate to powder of 100 parts maleic acid anhydride (product name: Maleic anhydride, available from Wako Pure Chemical Industries, Ltd.) as a polyvalent carboxylic acid was used as an bonding composition and the molding temperature was 160°C, and the same measurements as those described above were performed. The formulation of the bonding composition, the adhesion state, the board molding condition, and the results are shown in Table 6.

### Example 34

An aqueous dispersion was prepared by compounding 30 parts water and 26 parts wheat flour (product name: Red Ball, available from Nisshin Flour Milling Inc.) as a thickening agent to 75 parts malic acid (product name: Malic Acid, available from Wako Pure Chemical Industries, Ltd.) as a polyvalent carboxylic acid and 25 parts furfuryl alcohol (product name: Furfuryl Alcohol, available from Wako Pure Chemical Industries, Ltd.) as a furan compound. A plywood board was produced in the same manner as in Example 20, except that this aqueous dispersion was used as a bonding composition, and the same measurements as those described above were performed. The formulation of the bonding composition, the adhesion state, the board molding condition, and the results are shown in Table 6.

### Example 35

An aqueous dispersion was prepared by compounding 30 parts water and 26 parts wheat flour (product name: Red Ball, available from Nisshin Flour Milling Inc.) as a thickening agent to 50 parts malic acid (product name: Malic Acid, available from Wako Pure Chemical Industries, Ltd.) as a polyvalent carboxylic acid and 50 parts furfuryl alcohol (product name: Furfuryl Alcohol, available from Wako Pure Chemical Industries, Ltd.) as a furan compound. A plywood board was produced in the same manner as in Example 20, except that this aqueous dispersion was used as a bonding composition, and the same measurements as those described above were performed. The formulation of the bonding composition, the adhesion state, the board molding condition, and the results are shown in Table 6.

### Comparative Example 7

A plywood board was produced in the same manner as in Example 20, except that 100 parts sucrose (product name: Sucrose, available from Wako Pure Chemical Industries, Ltd.) as a saccharide were used as a bonding composition, and the same measurements as those described above were performed. The formulation of the bonding composition, the adhesion state, the board molding condition, and the results are shown in Table 6.

### Comparative Example 8

An aqueous dispersion was prepared by diluting polylactic acid emulsion (product number: PL-1000, available from Miyoshi Oil & Fat Co., Ltd) such that the mass ratio of non-volatile matter of polylactic acid to water was 100 : 100. A plywood board was produced in the same manner as in Example 20, except that this solution was used as a bonding composition, and the same measurements as those described above were performed. The formulation of the bonding composition, the adhesion state, the board molding condition, and the results are shown in Table 6.

### Comparative Example 9

An aqueous dispersion was prepared by diluting a urea-melamine resin adhesive (product number: PWP-731, available from Oshika Co., Ltd) such that the mass ratio of non-volatile matter of the urea-melamine resin to water was 100 : 60. A plywood board was produced in the same manner as in Example 20, except that this solution was used as a bonding composition, and the same measurements as those described above were performed. The formulation of the bonding composition, the adhesion state, the board molding condition, and the results are shown in Table 6.

**Table5**

| | | Ex.25 | Ex.26 | Ex.27 | Ex.28 | Ex.29 | Ex.30 | Ex. 31 |
|---|---|---|---|---|---|---|---|---|
| Polyvalent carboxylic acid | Type | Malic acid | Citric acid | Citric acid | Malic acid | Malic acid | Maleic acid anhydride | Maleic acid anhydride |
| | Boiling Point | 185°C | 180°C | 180°C | 185°C | 185°C | 130°C | 130°C |
| | Parts | 75 | 50 | 50 | 12 | 50 | 25 | 25 |
| Saccharide | Type | Sucrose | Sucrose | Sucrose | Sucrose | Sucrose | Sucrose | Sucrose |
| | Parts | 25 | 50 | 50 | 88 | 50 | 75 | 75 |
| Furan compound | Type | - | - | - | - | - | - | - |
| | Parts | - | - | - | - | - | - | - |
| Thickening agent | Type | - | - | PVA | Talc | Wheat flour | Wheat flour | Wheat flour |
| | Parts | - | - | 45 | 26 | 26 | 26 | 26 |
| Phosphate | Type | - | - | - | - | - | - | - |
| | Parts | - | - | - | - | - | - | - |
| Water | Parts | - | 30 | 30 | 30 | 30 | 30 | 30 |
| Form of bonding composition | | Powder | Liquid | Liquid | Liquid | Liquid | Liquid | Liquid |
| Adherend | Type | Cedar single plate | Cedar single plate | Cedar single plate | Cedar single plate | Cedar single plate | Cedar single plate | Cedar single plate |
| | Form | Flat board | Flat board | Flat board | Flat board | Flat board | Flat board | Flat board |
| Adhesion state | Application amount: solid content (g/m²) | 132 | 132 | 132 | 132 | 132 | 132 | 132 |
| | Temperature (°C) | 200 | 200 | 200 | 200 | 200 | 200 | 160 |
| | Time (min) | 10 | 10 | 10 | 10 | 10 | 10 | 10 |
| | Pressure (MPa) | 0.8 | 0.8 | 0.8 | 0.8 | 0.8 | 0.8 | 0.8 |
| Normal condition | Peel strength (N/mm²) | 0.4 | 0.1 | 0.9 | 0.8 | 1.0 | 0.7 | 0.8 |
| After immersion in water at 20°C for 24 h | Separation of single plate | A | P | A | A | A | A | A |
| | Swelling in thickness after immersion in water | 7% | Separated | 6% | 7% | 7% | 7% | 7% |
| After immersion in boiling water for 4 h | Separation of single plate | P | P | P | P | A | P | P |
| | Length of separation after boiling | 100% | 100% | 55% | 44% | 0% | 3% | 11% |
| Normal condition | Formaldehyde released | A | A | A | A | A | A | A |

| | | | | | | | | |
|---|---|---|---|---|---|---|---|---|
| A: absent, P: present, PVA: polyvinyl alcohol | | | | | | | | |

**Table 6**

| | | Ex. 32 | Ex. 33 | Ex. 34 | Ex.35 | Com. Ex. 7 | Com. Ex. 8 | Com. Ex. 9 |
|---|---|---|---|---|---|---|---|---|
| Polyvalent carboxylic acid | Type | Maleic acid anhydride | Maleic acid anhydride | Malic acid | Malic acid | - | Polylactic acid emulsion adhesive | Urea-melamine adhesive |
| | Boiling Point | 130°C | 130°C | 185°C | 185°C | - | - | - |
| | Parts | 25 | 100 | 75 | 50 | - | 100 | 100 |
| Saccharide | Type | Sucrose | - | - | - | Sucrose | - | - |
| | Parts | 75 | - | - | - | 100 | - | - |
| Furan compound | Type | - | - | Furfuryl alcohol | Furfuryl alcohol | - | - | - |
| | Parts | - | - | 25 | 50 | - | - | - |
| Thirkening agent | Type | Wheat flour | Wheat flour | Wheat flour | Wheat flour | - | - | - |
| | Parts | 26 | 26 | 26 | 26 | - | - | - |
| Phosphate | Type | Disodium hydrogen-phosphate | Disodium | - | - | - | - | - |
| | Parts | 8 | 8 | - | - | - | - | - |
| Water | Parts | 30 | 30 | 30 | 30 | - | 100 | 60 |
| Form of bonding composition | | Liquid | Liquid | Liquid | Liquid | Powder | Liquid | Liquid |
| Adherend | Type | Maple single plate | Maple single plate | Cedar single plate | Cedar single plate | Cedar single plate | Cedar single plate | Cedar single plate |
| | Form | Flat board | Flat board | Flat board | Flat board | Flat board | Flat board | Flat board |
| Adhesion state | Application amount: solid content (g/m²) | 132 | 132 | 132 | 132 | 132 | 132 | 132 |
| | Temperature (°C) | 160 | 160 | 200 | 200 | 200 | 200 | 200 |
| | Time (min) | 10 | 10 | 10 | 10 | 10 | 10 | 10 |
| | Pressure (MPa) | 0.8 | 0.8 | 0.8 | 0.8 | 0.8 | 0.8 | 0.8 |
| Normal condition | Peel strength (N/mm²) | 1.0 | 1.1 | 0.9 | 1.0 | Not bonded, and not molded. | 0.3 | 0.7 |
| After immersion in water at 20°C for 24 h | Separation of single plate | A | A | A | A | | P | A |
| | Swelling in thickness after immersion in water | 8% | 7% | 7% | 7% | | Separated | 7% |
| After immersion in boiling water for 4 h | Separation of single plate | P | P | P | P | | P | P |
| | Length of separation after boiling | 13% | 12% | 55% | 18% | | 100% | 12% |
| Normal condition | Formaldehyde released | A | A | A | A | | A | P |

| | | | | | | | | |
|---|---|---|---|---|---|---|---|---|
| A: absent, P: present | | | | | | | | |

As described above, Examples 20-30 are able to bond single plates to each other, thereby enabling production of a plywood board. Comparative Example 7 has low adhesive strength, and it is impossible to make a plywood board. This is probably because Comparative Example 7 has no polyvalent carboxylic acid, and the modification for a bonding component does not occur. Example 20 and Example 21 are capable of providing adhesion, but adhesion, water resistance, and hot water resistance are a little lower. This is probably because no thickening agent is added, and thus more bonding components are penetrated the single plate. In each of Examples 22-30, since a thickening agent is added, penetration of the bonding component in and runoff of the bonding component from the single plate are suppressed, and therefore adhesion, water resistance, and hot water resistance are further improved. A molding temperature, adhesion, water resistance, and hot water resistance are improved depending on the types and the compounding of a polyvalent carboxylic acid, a thickening agent, and a phosphate. Example 24 shows no separation between the single plates occurs even when the plywood board is subjected to boiling water. In Example 28, the formulation is changed from Example 20 such that the content of a polyvalent carboxylic acid is increased and a phosphate is mixed in. According to Example 28, adhesion at a relatively low temperature is improved. Example 29 and Example 30 are capable of providing adhesion by using a furan compound instead of a saccharide. Example 29 and Example 30 have adhesion, water resistance, and hot water resistance which are improved more than Example 20 and Example 21. In Comparative Example 8, which is an adhesive product and is derived from plant materials, adhesive strength in normal condition is not high, and water resistance is low. Furthermore, in Comparative Example 9, which is an adhesive product, but is not derived from plant materials, adhesion and water resistance are high, but separation between the single plates is not completely prevented when the plywood board is subjected to boiling water.

Examples 36-42 (comparison using a broadleaf tree fiberboard obtained by bonding broadleaf tree fibers)

### Example 36

Powder obtained by mixing 50 parts of citric acid (product name: Citric Acid, available from Wako Pure Chemical Industries, Ltd.) as a polyvalent carboxylic acid and 50 parts of sucrose (product name: Sucrose, available from Wako Pure Chemical Industries, Ltd.) as a saccharide was dissolved in 100 parts of water to be an aqueous solution. This aqueous solution was used as a bonding composition. Furthermore, during blending, the bonding composition was sprayed with a spray gun on broadleaf tree fibers (average length of 3 mm) obtained from the xylem of a broadleaf tree, so that a dry weight ratio of broadleaf tree fibers to non-volatile matter (solid content) of the bonding composition was 1000 : 200. Hereafter, the broadleaf tree fibers, on which the bonding composition was sprayed, were dried at 80°C for 20 minutes in a dryer, were piled up in a mat-like manner and were subjected to press molding at a heating platen temperature of 190°C and at a pressure of 2 MPa for 5 minutes to produce a fiberboard with a thickness of 2 mm and a density of 800 kg/m³. After immersing the board of the present example in water, peel strength and swelling in thickness were measured according to JIS A 5905. The formulation of the bonding composition, the adhesion state, the board molding condition and the results are shown in Table 7.

### Example 37

A fiberboard was made as in Example 36, and the same measurements as those described above were performed, except that a molding time was 3 minutes. The formulation of the bonding composition, the adhesion state, the board molding condition, and the results are shown in Table 7.

### Example 38

A powder obtained by mixing 50 parts citric acid (product name: Citric Acid, available from Wako Pure Chemical Industries, Ltd.) as a polyvalent carboxylic acid and 50 parts sucrose (product name: Sucrose, available from Wako Pure Chemical Industries, Ltd.) as a saccharide was dissolved in 100 parts water to be an aqueous solution. A bonding composition was prepared by further dissolving 0.5 parts *p*-toluenesulfonic acid (product name: *p*-Toluenesulfonic Acid, available from Wako Pure Chemical Industries, Ltd.) in this aqueous solution. Furthermore, during blending, the bonding composition was sprayed with a spray gun on broadleaf tree fibers (average length of 3 mm) obtained from the xylem of a broadleaf tree, so that a dry weight ratio of broadleaf tree fibers to the non-volatile matter (solid content) of the bonding composition was 1000 : 200. Hereafter, broadleaf tree fibers, on which the bonding composition was sprayed, were dried at 80°C for 20 minutes in a dryer, were piled up in a mat-like manner, and were subjected to press molding at a heating platen temperature of 190°C and at a pressure of 2 MPa for 3 minutes to produce a fiberboard with a thickness of 2 mm and a density of 800 kg/m³. Peel strength and swelling in thickness after immersion in water of the board of the present example were measured according to JIS A 5905. The formulation of the bonding composition, the adhesion state, the board molding condition, and the results are shown in Table 7.

### Example 39

A fiberboard was produced in the same manner as in Example 38, except that 1 part *p*-toluenesulfonic acid was added, and the same measurements as those described above were performed. The formulation of the bonding composition, the adhesion state, the board molding condition, and the results are shown in Table 7.

### Example 40

A fiberboard was produced in the same manner as in Example 38, except that 2 parts *p*-toluenesulfonic acid were added, and the same measurements as those described above were performed. The formulation of the bonding composition, the adhesion state, the board molding condition, and the results are shown in Table 7.

### Example 41

A fiberboard was produced in the same manner as in Example 38, except that 5 parts *p*-toluenesulfonic acid were added, and the same measurements as those described above were performed. The formulation of the bonding composition, the adhesion state, the board molding condition, and the results are shown in Table 7.

### Example 42

A fiberboard was produced in the same manner as in Example 38, except that 10 parts *p*-toluenesulfonic acid were added, and the same measurements as those described above were performed. The formulation of the bonding composition, the adhesion state, the board molding condition, and the results are shown in Table 7.

**Table 7**

| | | Ex. 36 | Ex. 37 | Ex.38 | Ex. 39 | Ex. 40 | Ex. 41 | Ex. 42 |
|---|---|---|---|---|---|---|---|---|
| Polyvalent carboxylic acid | Type | Citric acid | Citric acid | Citric acid | Citric acid | Citric acid | Citric acid | Citric acid |
| | Boiling Point | 180°C | 180°C | 180°C | 180°C | 180°C | 180°C | 180°C |
| | Parts | 50 | 50 | 50 | 50 | 50 | 50 | 50 |
| Saccharide | Type | Sucrose | Sucrose | Sucrose | Sucrose | Sucrose | Sucrose | Sucrose |
| | Parts | 50 | 50 | 50 | 50 | 50 | 50 | 50 |
| *p*-Toluenesulfonic acid | Type | - | - | *p*-Toluenesulfonic acid | *p*-Toluenesulfonic acid | *p*-Toluenesulfonic acid | *p*-Toluenesulfonic acid | *p*-Toluenesulfonic acid |
| | Parts | - | - | 0.5 | 1 | 2 | 5 | 10 |
| Water | Parts | 100 | 100 | 100 | 100 | 100 | 100 | 100 |
| Form of bonding composition | | Liquid | Liquid | Liquid | Liquid | Liquid | Liquid | Liquid |
| Adherend | Type | Broadleaf tree fiber | Broadleaf tree fiber | Broadleaf tree fiber | Broadleaf tree fiber | Broadleaf tree fiber | Broadleaf tree fiber | Broadleaf tree fiber |
| | Form | Fiber | Fiber | Fiber | Fiber | Fiber | Fiber | Fiber |
| Adhesion state | Resin ratio | 17% | 17% | 17% | 17% | 17% | 17% | 17% |
| | Temperature (°C) | 190 | 190 | 190 | 190 | 190 | 190 | 190 |
| | Time (min) | 5 | 3 | 3 | 3 | 3 | 3 | 3 |
| | Pressure (MPa) | 2.0 | 2.0 | 2.0 | 2.0 | 2.0 | 2.0 | 2.0 |
| Normal condition | Peel strength (N/mm²) | 1.5 | 1.0 | 1.6 | 1.6 | 1.6 | 1.6 | 1.2 |
| After immersion in water at 20°C for 24 h | Swelling in thickness after immersion in water | 11% | 14% | 11% | 10% | 10% | 11% | 12% |
| Normal condition | Formaldehyde released | A | A | A | A | A | A | A |

| | | | | | | | | |
|---|---|---|---|---|---|---|---|---|
| A: absent | | | | | | | | |

As described above, Examples 36-42 are able to bond fibers to each other, thereby enabling production of a fiberboard. In each of Examples 36 and 37, a fiberboard is molded without adding *p*-toluenesulfonic acid. In Example 36 in which the molding time was 5 minutes, the physical properties become high, but in Example 37 in which the molding time was 3 minutes, the physical properties become low. As compared with Example 37, in each of Examples 36-42 in which *p*-toluenesulfonic acid is added, the physical properties are improved even if the molding time is 3 minutes. In each of Examples 36-41, the physical properties comparable to that of Example 36 in which the molding time is 5 minutes are obtained. Adding *p*-toluenesulfonic acid probably causes promotion of the reaction, and improvement of adhesion and water resistance. Since Example 42 in which 10 parts of *p*-toluenesulfonic acid are added shows decreased physical properties, adding 10 or more parts of *p*-toluenesulfonic acid is probably excessive.

From the results of Examples described above, it is clear that it is possible to obtain an bonding composition and a woody board using materials that are readily available and inexpensive by a very simple process without using fossil products.

## Claims

1. A bonding composition to be cured through heating and pressing, comprising:
a polyvalent carboxylic acid having a plurality of carboxyl groups in a molecule;
a saccharide; and
*p*-toluenesulfonic acid.

2. The bonding composition according to claim 1, wherein
the bonding composition is at least in form of an aqueous solution where the polyvalent carboxylic acid is dissolved in water or an aqueous dispersion where the polyvalent carboxylic acid is dispersed in water.

3. The bonding composition according to claim 1, wherein:
a composition ratio in parts by mass of the polyvalent carboxylic acid to a total of the polyvalent carboxylic acid and the saccharide is 10 or more and less than 100 : 100; sand
a composition ratio in parts by mass of the saccharide to the total of the polyvalent carboxylic acid and the saccharide is more than 0 and not more than 90 : 100.

4. A board obtained through heating and pressing element pieces such as fibers, fragments and single plates derived from woody or herbaceous plants, which the bonding composition according to any one of claims 1 to 3 is applied to or sprayed on, to cure the bonding composition.

5. A board obtained through heating and pressing element pieces such as inorganic fibers and fragments, which the bonding composition according to any one of claims 1 to 3 is applied to or sprayed on, to cure the bonding composition.

## Patentansprüche

1. Bindungszusammensetzung, die durch Erwärmen und Pressen gehärtet wird, umfassend:
eine mehrwertige Carbonsäure mit einer Vielzahl an Carboxylgruppen in einem Molekül,
ein Saccharid, und
*p*-Toluolsulfonsäure.

2. Bindungszusammensetzung gemäß Anspruch 1, wobei die Bindungszusammensetzung mindestens in der Form einer wässrigen Lösung, wobei die mehrwertige Carbonsäure in Wasser gelöst ist, oder einer wässrigen Dispersion, wobei die mehrwertige Carbonsäure in Wasser dispergiert ist, ist.

3. Bindungszusammensetzung gemäß Anspruch 1, wobei:
ein Zusammensetzungsverhältnis in Massenteilen bezüglich der mehrwertigen Carbonsäure zu einer Gesamtmenge der mehrwertigen Carbonsäure und des Saccharids 10 oder mehr und weniger als 100 : 100 beträgt, und
ein Zusammensetzungsverhältnis in Massenteilen bezüglich des Saccharids zu der Gesamtmenge der mehrwertigen Carbonsäure und des Saccharids mehr als 0 und nicht mehr als 90 : 100 beträgt.

4. Platte, erhalten durch Erwärmen und Drücken von Elementstücken wie Fasern, Fragmenten und Einzelplatten, abgeleitet von holzartigen oder krautartigen Pflanzen, auf welche die Bindungszusammensetzung gemäß einem der Ansprüche 1 bis 3 aufgebracht oder gesprüht wird, um die Bindungszusammensetzung zu härten.

5. Platte, erhalten durch Erwärmen und Pressen von Elementstücken wie anorganischen Fasern und Fragmenten, auf welche die Bindungszusammensetzung gemäß einem der Ansprüche 1 bis 3 aufgebracht oder gesprüht wird, um die Bindungszusammensetzung zu härten.

## Revendications

1. Composition liante destinée à être durcie par chauffage et pression, comprenant :
un acide carboxylique polyvalent comportant une pluralité de groupes carboxyles sur une molécule ;
un saccharide et
de l'acide *p*-toluènesulfonique.

2. Composition liante selon la revendication 1, dans laquelle
la composition liante est au moins sous la forme d'une solution aqueuse dans laquelle l'acide carboxylique polyvalent est dissous dans de l'eau, ou d'une dispersion aqueuse dans laquelle l'acide carboxylique polyvalent est dispersé dans de l'eau.

3. Composition liante selon la revendication 1, dans laquelle :
un rapport de composition en parties en masse de l'acide carboxylique polyvalent sur un total de l'acide carboxylique polyvalent et du saccharide est supérieur ou égal à 10 et inférieur à 100 : 100 ; et
un rapport de composition en parties en masse du saccharide sur le total de l'acide carboxylique polyvalent et du saccharide est supérieur à 0 et non supérieur à 90 : 100

4. Panneau obtenu par chauffage et pression de composants élémentaires, tels que des fibres, des fragments et des plaques simples dérivés de bois ou de plantes herbacées, sur lesquels la composition liante selon l'une quelconque des revendications 1 à 3 est appliquée ou pulvérisée, de manière à durcir la composition liante.

5. Panneau obtenu par chauffage et pression de composants élémentaires, tels que des fibres et des fragments inorganiques, sur lesquels la composition liante selon l'une quelconque des revendications 1 à 3 est appliquée ou pulvérisée, de manière à durcir la composition liante.
